# EUROPEAN PATENT APPLICATION

(11) **EP 1 595 607 A1**
(43) Date of publication of application: **16.11.2005**
(21) Application number: 03768285.3
(22) Date of filing: 26.12.2003
(51) Int. Cl.: B09B 3/00, B60R 22/46

(54) **METHOD OF PROCESSING DISCARDED SEATBELT PRETENSIONER**

(30) Priority: 16.01.2003 JP 2003007801; 20.03.2003 JP 2003077055
(71) Applicant: DAICEL CHEMICAL INDUSTRIES, LTD., Sakai-shi, Osaka 590-8501 (JP)
(72) Inventor: NAKAZAWA, Yuji, Kako-gun, Hyogo 675-0151 (JP)
(74) Representative: Grünecker, Kinkeldey, Stockmair & Schwanhäusser Anwaltssozietät
(86) International application number: PCT/JP2003/016853
(87) International publication number: WO 2004/062826

(57) **Abstract**

The present invention provides a highly workable disposal method for a seatbelt pretensioner used in an air bag.

This method is a disposal method for a seatbelt pretensioner and attachments thereof, in which the attachments are removed, whereupon the seatbelt pretensioner, which contains an explosive component, is subjected to thermal treatment at a temperature that is equal to or greater than the ignition point of the explosive component.

## Description

### Technical Field of the Invention

The present invention relates to a disposal method for a seatbelt pretensioner attached to a seatbelt of an automobile.

### Prior Art

A seatbelt is attached to an automobile to protect a passenger from impact during a collision, and a seatbelt pretensioner (a device attached with a gas generator containing an ignition charge and a gas generating agent for tightening the seatbelt) is attached to the seatbelt as means for tightening the seatbelt to protect the passenger when the automobile collides.

It is predicted that in the future, more and more automobiles comprising a seatbelt pretensioner that contains an ignition charge and a gas generating agent will be discarded, and therefore, from the viewpoints of safety and effective utilization of resources, it is necessary to treat the ignition charge and gas generating agent safely to recover metals and the like therefrom.

During treatment of a seatbeltpretensioner, it is necessary to activate the installed ignition charge and gas generating agent through high-temperature treatment, recover and reuse usable resources such as metals, and also to ensure safety during the treatment such that no harmful substances are generated.

JP-A No. 11-101422 may be cited as prior art relating to the present invention.

### Disclosure of the Invention

An object of the present invention is to provide a seatbelt pretensioner disposal method with which a seatbelt pretensioner can be treated safely and efficiently during the disposal of an automobile or the like, and which facilitates the recovery and reuse of usable materials.

As means for achieving this object, the present invention provides a seatbelt pretensioner disposal method for a seatbelt pretensioner and attachments thereof, wherein the seatbelt pretensioner, which contains an explosive component, and the attachments thereof, are subjected to thermal treatment at a temperature that is equal to or higher than an ignition point of the explosive component.

As further means for achieving this object, the present invention provides a seatbelt pretensioner disposal method for a seatbelt pretensioner and attachments thereof, wherein the seatbelt pretensioner, which contains an explosive component, is subjected to thermal treatment at a temperature that is equal to or higher than an ignition point of the explosive component after removing the attachments.

As further means for achieving this object, the present invention provides a seatbelt pretensioner disposal method for a seatbelt pretensioner and attachments thereof, wherein only a part containing an explosive component is removed from the seatbelt pretensioner, and this part is subjected to thermal treatment at a temperature that is equal to or higher than an ignition point of the explosive component.

The explosive component of the present invention includes both an ignition charge for igniting a gas generating agent and a gas generating agent for generating a gas.

The seatbelt pretensioner is attached to an automobile together with a seatbelt and a retractor attached with a fixing buckle, and therefore, when removed from a discarded vehicle, the seatbelt pretensioner, seatbelt, fixing buckle, and retractor are removed in integral form. Accordingly, the attachments of the present invention denote the parts other than the seatbelt pretensioner, i.e. the seatbelt, fixing buckle, and retractor.

The seatbelt pretensioner and attachments serving as the treatment subjects of the present invention comprise all components that need to be treated for a variety of reasons, for example defective goods produced during the manufacturing process, goods returned from the automobile maker, inventory goods that are no longer in production, and seatbelt pretensioners removed from discarded vehicles. Note that defective goods produced during the manufacturing process, goods returned from the automobile maker, and inventory goods that are no longer in production include seatbelt pretensioners without attachments.

According to the seatbelt pretensioner disposal method of the present invention, treatment can be performed safely and efficiently, the generation of harmful substances such as dioxins can be suppressed greatly, and the recovery and reuse of usable materials can be facilitated.

### Brief Description of the Drawing

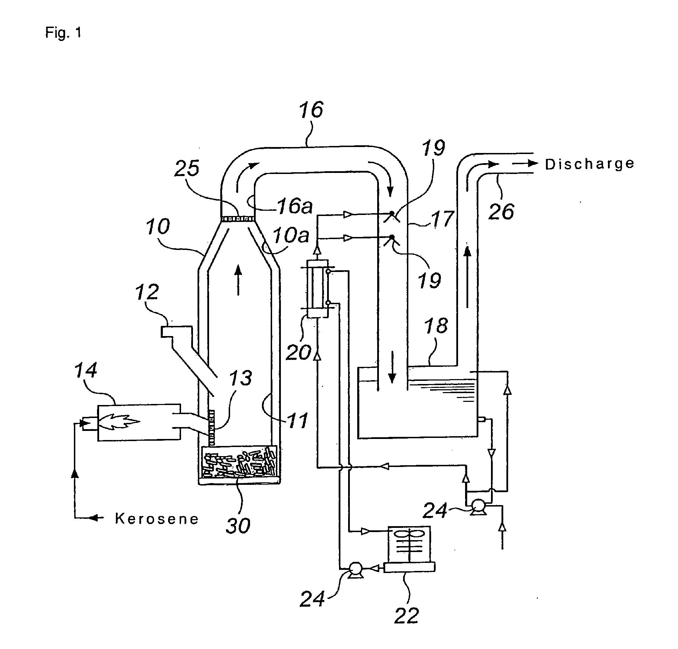

Fig. 1 is a view illustrating a treatment method of the present invention.

### Explanation of Numerals

- 10: thermally treating tower
- 12: seatbelt pretensioner introducing port
- 14: combustion furnace
- 16: exhaust gas tube
- 17: cooling tower

### Preferred Embodiments of the Invention

A seatbelt pretensioner disposal method of the present invention will be described using Fig. 1. Fig. 1 illustrates thermally treating equipment that may also be applied to the treatment of inflators for various types of air bags, comprising a thermally treating tower, an introducing port for introducing a seatbelt pretensioner into the thermally treating tower, a heating device disposed within the thermally treating tower, and a cooling device for cooling gas that is discharged from the thermally treating tower.

First, in a case where the seatbelt pretensioner is formed integrally with attachments, the attachments, constituted by a seatbelt, a fixing buckle, and a retractor, are removed as preliminary processing for thermally treating the seatbelt pretensioner.

Note that the seatbelt pretensioner is constituted by a main body portion and a micro gas generator (abbreviated to MGG) accommodating an ignition charge and a gas generating agent, and therefore such a method may be employed that the main body portion and MGG are separated from each other, the MGG alone is subjected to thermal treatment, and the main body portion is subjected to separation and recovery processing together with the attachments.

Once the attachments and MGG have been removed, the seatbelt pretensioner is separated into plastic and metal types. The plastic may be separated into thermoplastic resins and thermosetting resins, or may be separated according to the material of the plastic. The seatbelt pretensioner often contains metals such as iron, stainless steel, zinc alloy, and aluminum, and therefore it is important to conduct the separation operation with a view to recycling valuable resources.

Next, the seatbelt pretensioner, having undergone preliminary processing if necessary, is introduced into the thermally treating tower, where the processing of a thermal treatment step is performed at a temperature which burns the ignition charge and gas generating agent in the seatbelt pretensioner, but does not melt the metals constituting the seatbelt pretensioner.

As shown in Fig. 1, for example, it is desirable that a thermally treating tower 10 form an entire, single treatment system (thermally treating equipment) together with an exhaust gas tube 16, a seatbelt pretensioner introducing port 12, a combustion furnace (for example, a combination of a high-calorie burner and a low-calorie burner) 14, an exhaust gas cooling tower 17, an exhaust gas cooling shower 19, a cooling tower tank 18, and a gas discharge tube 26, all of which are annexed to the thermally treating tower 10. The reference numerals 13 and 25 denote metal gratings or the like formed from wire mesh, punched metal, iron, or similar, the reference numeral 20 denotes a heat exchanger, the reference numeral 22 denotes a cooling tower, and the reference numeral 24 denotes a pump. Note that a metal partition wall 11 (see Fig. 1), which exhibits the same action (protecting the inner wall of the thermally treating tower 10) as a device disclosed in Fig. 1 and so on of JP-A No. 11-101422, may be provided inside the thermally treating tower 10. Other devices or systems may be combined with the system shown in Fig. 1 as required.

Having been introduced into the thermally treating tower 10 through the seatbelt pretensioner introducing port 12, a seatbelt pretensioner 30 is heated to at least a predetermined temperature such that the ignition charge and gas generating agent therein are ignited and burned. The thermal treatment temperature in the thermally treating tower 10 is set such that the ignition charge and gas generating agent inside the seatbelt pretensioner 30 burn but the metals constituting the seatbelt pretensioner 30 do not melt.

The temperature at which the gas generating agent burns is equal to or greater than the ignition point of the ignition charge and gas generating agent. The ignition point differs according to the composition of the ignition charge and gas generating agent. The ignition point of a typical ignition charge or gas generating agent is approximately 150 to 500°C, but at excessively high temperatures, the inner wall of the thermally treating tower 10 may be damaged, and therefore the temperature in the interior of the thermally treating tower 10 is preferably in the range of 150 to 700°C.

The temperature at which the main metals constituting the seatbelt pretensioner do not melt depends on the material of the seatbelt pretensioner. However, these metals are typically aluminum, iron, and stainless steel, and therefore a temperature which is lower than the melting temperature of these metals serves as a maximum temperature. In the case of aluminum, a temperature range of 450 to 550°C is preferable, whereas in the case of iron and stainless steel, a temperature range of 550 to 700°C is preferable. As noted above, it is also desirable that prevention of heat damage to the thermally treating tower 10 be taken into consideration.

The combustion gas is discharged through the exhaust gas tube 16 connected to a ceiling portion of the thermally treating tower 10, cooled in the cooling tower 17 by a water spray produced by the cooling shower 1-9, and then led into water contained in the cooling tower tank 18. The gas that accumulates inside the cooling tower tank 18 is discharged into the atmosphere through the gas discharge tube 26.

In the thermal treatment performed in the thermally treating tower 10, the internal temperature of the thermally treating tower 10 is preferably raised in advance, using the combustion furnace 14, to a temperature at which the ignition charge and gas generating agent inside the seatbelt pretensioner 30 burns but the metals constituting the seatbelt pretensioner 30 do not melt (in the case of aluminum, about 500°C), and then maintained at that temperature. A method in which the high-calorie burner and low-calorie burner are burned simultaneously, the high-calorie burner is halted when the predetermined temperature is reached, and only the low-calorie burner is burned thereafter, may be applied as this temperature raising and maintaining method. At this time, the amount of air blown into the thermally treating tower 10 may be adjusted accordingly.

After the seatbelt pretensioner 30 is introduced into the thermally treating tower 10, the predetermined temperature is maintained until treatment of the seatbelt pretensioner 30 is complete. Likewise in a case where a plurality of seatbelt pretensioners 30 is introduced in several batches and treated in order of introduction, measures are taken to ensure that the predetermined temperature is maintained until treatment of the seatbelt pretensioner 30 introduced last is complete.

If the combustion furnace 14 is halted immediately after the seatbelt pretensioner 30 is introduced, treatment of the seatbelt pretensioner (combustion processing of the ignition charge and gas generating agent) may be insufficient, and hence the temperature management described above is preferably performed to prevent the occurrence of such a situation.

The duration period of the predetermined temperature during the thermal treatment process is determined in advance by confirming one or both of an amount of time required for all of the ignition charge, gas generating agent, or other agent in the seatbelt pretensioner to be activated, which is determined by means of a thermal stability test in which the seatbelt pretensioner is exposed to an atmosphere having the temperature at which the seatbelt pretensioner is to be treated in the thermally treating tower 10, and an amount of time required for the seatbelt pretensioner to be treated, which is determined by means of a bonfire test performed on the seatbelt pretensioner (in which the seatbelt pretensioner is exposed to a flame and the state of the seatbelt pretensioner is observed). The predetermined temperature duration period is set at least equal to or longer than a period in which the seatbelt pretensioner can be treated.

To ensure that the seatbelt pretensioner is activated reliably, the duration period of the predetermined temperature during the thermal treatment process is preferably set between one and one hundred times the time required to complete treatment of the seatbelt pretensioner following introduction thereof, or following introduction of the final seatbelt pretensioner when a plurality of seatbelt pretensioners is introduced in several batches, and more preferably between three and thirty times this time.

Alternatively, treatment in the thermally treating tower 10 may be performed using a method in which the internal temperature of the thermally treating tower 10 is raised in advance to a temperature near the ignition point of the ignition charge and gas generating agent, the seatbelt pretensioner 30 is introduced therein, and then the temperature is raised at once, or a method in which the internal temperature of the thermally treating tower 10 is held at normal temperature or a temperature that is considerably lower than the ignition point of the ignition charge and gas generating agent, the seatbelt pretensioner 30 is introduced therein, and then the temperature is raised gradually.

Note that during thermal treatment in the thermally treating tower 10, the pressure generated during combustion of the ignition charge and gas generating agent may act as thrust which propels the seatbelt pretensioner 30. However, the partition means 25 formed from wire mesh, punched metal, a metal grating, or similar are attached removably between the thermally treating tower 10 and the exhaust gas tube 16, and therefore the seatbelt pretensioner 30 is prevented from flying out of the thermally treating tower 10. The partition means 25 are attached removably using a bolt and nut in a flange portion provided on an inner wall surface 10a of the thermally treating tower 10 or an inner wall surface 16a of the exhaust gas tube 16. Further, by providing the partition means 13 between the thermally treating tower 10 and combustion furnace 14 to perform a similar function to the partition means 25, the seatbelt pretensioner 30 is prevented from flying into the combustion furnace 14.

The processes performed prior to thermal treatment are preferably performed in an indoor facility comprising a lightning conductor to prevent the seatbelt pretensioner from malfunctioning prior to treatment in the event of a lightning strike. For the same reason, when storing the seatbelt pretensioner temporarily prior to treatment, the seatbelt pretensioner is preferably stored in an indoor facility comprising a lightning conductor.

Following the thermal treatment described above, the metals and other valuable resources contained in the combustion residue are preferably separated and recovered together with or separately from the attachments.

### Example

The present invention will now be described in more detail on the basis of an example. However, the present invention is not limited to or by this example.

### Example 1

A seatbelt pretensioner and its attachments, obtained during the demolition of a discarded vehicle, are formed integrally, and therefore the attachments, constituted by a seatbelt, a fixing buckle, and a retractor, were removed, leaving a metal component (the seatbelt pretensioner) including an MGG.

Next, the seatbelt pretensioner including the MGG (outer diameter: 17mm; height: 31.5mm in columnar form; outer shell container is formed from aluminum with a melting point of 660°C; ignition charge is constituted by zirconium/potassium perchlorate with an ignition point of 491°C; gas generating agent is constituted by 0.85g of a substance containing cellulose nitrate and potassium nitrate, with an ignition point between 160 and 180°C) was subjected to thermal treatment.

The combustion furnace 14 was activated, whereby the internal temperature of the thermally treating tower 10 was raised in advance to, and maintained at, approximately 500°C. In this temperature atmosphere, a total of two hundred seatbelt pretensioners 30 were introduced into the thermally treating tower 10 through the seatbelt pretensioner introducing port 12 in ten batches at six-minute intervals. Following introduction of the tenth batch of seatbelt pretensioners 30, the internal temperature of the thermally treating tower 10 was maintained at 500°C for approximately 25 minutes. Note that the time required to treat twenty seatbelt pretensioners 30 was determined, as a result of experiment, to be between 114 and 484 seconds, and therefore high-temperature treatment of the inflator 30 was completed by maintaining the interior of the thermally treating tower 10 at the predetermined temperature for approximately 6 to 24 minutes.

The gas generating agent in the seatbelt pretensioner 30 was ignited and burned, and the gas produced by this combustion was discharged to the cooling tower 17 through the exhaust gas tube 16. The gas was cooled in the cooling tower 17 by a water spray produced by the cooling shower 19, and then led into the water inside the cooling tower tank 18. The accumulated gas inside the cooling tower tank 18 was discharged into the atmosphere through the gas discharge tube 26. The temperature of the gas at the time of discharge was approximately 50°C.

When the gas inside the exhaust gas tube 16 was extracted and measured, the dioxin concentration thereof was found to be not more than 0.15ng-TEQ/Nm³. Analysis was performed in accordance with the "Dioxins Measurement Manual In Waste Matter Treatment", prepared by the Waste Management Section of the Water Supply and Environmental Sanitation Department in the Environmental Health Bureau of the Japanese Ministry of Health and Welfare.

## Claims

1. A seatbelt pretensioner disposal method for a seatbelt pretensioner and attachments thereof, wherein the seatbelt pretensioner, which contains an explosive component, and the attachments thereof, are subjected to thermal treatment at a temperature that is equal to or higher than an ignition point of the explosive component.

2. A seatbelt pretensioner disposal method for a seatbelt pretensioner and attachments thereof, wherein the seatbelt pretensioner, which contains an explosive component, is subjected to thermal treatment at a temperature that is equal to or higher than an ignition point of the explosive component after removing the attachments.

3. A seatbelt pretensioner disposal method for a seatbelt pretensioner and attachments thereof, wherein only a part containing an explosive component is removed from the seatbelt pretensioner, and this part is subjected to thermal treatment at a temperature that is equal to or higher than an ignition point of the explosive component.

4. The seatbelt pretensioner disposal method according to any one of claims 1 to 3, wherein valuable resources, including metals, are separated and recovered from combustion residue produced by the thermal treatment.

5. The seatbelt pretensioner disposal method according to any one of claims 1 to 4, wherein the removed attachments and/or the seatbelt pretensioner that remains after removal of the part containing the explosive component are further dismantled, whereby plastics and metals are separated and recovered according to type.

6. The seatbelt pretensioner disposal method according to any one of claims 1 to 5, wherein processing prior to the thermal treatment or storage of the seatbelt pretensioner prior to the thermal treatment is performed in an indoor facility comprising a lightning conductor.

7. The seatbelt pretensioner disposal method according to any one of claims 1 to 6, wherein the seatbelt pretensioner is treated using thermally treating equipment comprising a thermally treating tower, a seatbelt pretensioner introducing port for introducing the seatbelt pretensioner into the thermally treating tower, a heating device disposed in the interior of the thermally treating tower, and a cooling device for cooling gas that is discharged from the thermally treating tower.
